# EUROPEAN PATENT APPLICATION

(11) **EP 3 657 874 A1**
(43) Date of publication of application: **27.05.2020**
(21) Application number: 17918365.2
(22) Date of filing: 21.07.2017
(51) Int. Cl.: H04W 72/04, H04L 27/26

(54) **USER TERMINAL AND WIRELESS COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2017/026519
(87) International publication number: WO 2019/016953

(57) **Abstract**

Deterioration of performance due to collision of signals is prevented. A user terminal according to one aspect of the present invention includes: a reception section that receives a DL control channel; and a control section that controls monitoring of a DL control channel candidate, and the control section controls monitoring of a DL control channel candidate in a first control resource set configured by a network, and monitoring of a DL control channel candidate in a second control resource set configured by the network, and at least one of an aggregation level, a payload length of DL control information, a CRC length and a time interval is different between the DL control channel in the first control resource set and the DL control channel in the second control resource set.

## Description

### Technical Field

The present invention relates to a user terminal and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of wider bands and a higher speed than those of LTE (also referred to as LTE Rel. 8 or 9), LTE-Advanced (LTE-A that is also referred to as LTE Rel. 10, 11 or 12) has been specified, and LTE successor systems (also referred to as, for example, Future Radio Access (FRA), the 5th generation mobile communication system (5G), 5G+ (plus), New Radio (NR), New radio access (NX), Future generation radio access (FX) or LTE Rel. 13, 14, 15 or subsequent releases) have been also studied.

Legacy LTE systems (e.g., LTE Rel. 8 to 13) perform communication on Downlink (DL) and/or Uplink (UL) by using a subframe (also referred to as a TTI: Transmission Time Interval) of 1 ms. This subframe is a transmission time unit of one channel-coded data packet, and is a processing unit of scheduling, link adaptation or retransmission control (HARQ: Hybrid Automatic Repeat reQuest).

A radio base station controls data allocation (scheduling) for a user terminal (UE: User Equipment), and notifies the user terminal of data scheduling by using DL control information (DCI: Downlink Control Information). The user terminal monitors a DL control channel (PDCCH) on which the DL control information is transmitted to perform reception processing (demodulation and decoding processing), and controls reception of DL data and/or transmission of uplink data based on the received DL control information.

Transmission on a DL control channel (PDCCH/EPDCCH) is controlled by using an aggregation of one or a plurality of Control Channel Elements (CCEs/Enhanced Control Channel Elements (ECCEs)). Furthermore, each control channel element includes a plurality of Resource Element Groups (REGs/Enhanced Resource Element Groups (EREGs)). The resource element groups are used, too, when a control channel is mapped on a Resource Element (RE).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

It is assumed that future radio communication systems (e.g., LTE Rel. 14, 15 and subsequent releases, 5G and NR) control scheduling of data by using a different configuration from those of legacy LTE systems (e.g., LTE Rel. 13 or prior releases). More specifically, it is demanded that the future radio communication systems support flexible use of numerologies and a frequency, and realizes a dynamic frame configuration. The numerologies refer to, for example, communication parameters (e.g., a subcarrier-spacing and a bandwidth) to be applied to transmission and reception of a certain signal.

Furthermore, it has been studied for the future radio communication systems to use for a control channel and/or a data channel a different configuration from those of the legacy LTE systems. There is a risk that, when control channel configurations of the legacy LTE systems are used in the configuration different from that of the legacy LTE systems, it is not possible to appropriately perform communication.

The present invention has been made in light of this point, and one of objects of the present invention is to provide a user terminal and a radio communication method that can appropriately communicate a control channel when performing communication by applying a configuration different from those of legacy LTE systems.

### Solution to Problem

A user terminal according to one aspect of the present invention includes: a reception section that receives a DL control channel; and a control section that controls monitoring of a DL control channel candidate, and the control section controls monitoring of a DL control channel candidate in a first control resource set configured by a network, and monitoring of a DL control channel candidate in a second control resource set configured by the network, and at least one of an aggregation level, a payload length of DL control information, a CRC length and a time interval is different between the DL control channel in the first control resource set and the DL control channel in the second control resource set.

### Advantageous Effects of Invention

According to the present invention, it is possible to appropriately communicate a control channel.

### Brief Description of Drawings

Figs. 1A and 1B are diagrams illustrating one example of CORESETs.
Fig. 2 is a diagram illustrating one example of a definition of CORESET types 1 and 2.
Fig. 3 is a diagram illustrating one example of an allocation of the CORESET types 1 and 2.
Figs. 4A and 4B are diagrams illustrating one example of whether or not a UE monitors PDCCH candidates when data overlaps a CORESET.
Figs. 5A and 5B are diagrams illustrating one example of the number of times of BD actually executed by the UE.
Fig. 6 is a diagram illustrating one example of a schematic configuration of a radio communication system according to one embodiment of the present invention.
Fig. 7 is a diagram illustrating one example of an overall configuration of a radio base station according to the one embodiment of the present invention.
Fig. 8 is a diagram illustrating one example of a function configuration of the radio base station according to the one embodiment of the present invention.
Fig. 9 is a diagram illustrating one example of an overall configuration of a user terminal according to the one embodiment of the present invention.
Fig. 10 is a diagram illustrating one example of a function configuration of the user terminal according to the one embodiment of the present invention.
Fig. 11 is a diagram illustrating one example of hardware configurations of the radio base station and the user terminal according to the one embodiment of the present invention.

### Description of Embodiments

Future radio communication systems (e.g., 5G and NR that will be simply referred to as NR below) are expected to realize various radio communication services while meeting respectively different requirements (e.g., an ultra high speed, a large capacity and ultra low latency).

For example, it is considered for NR to provide radio communication services that are referred to as enhanced Mobile Broad Band (eMBB), massive Machine Type Communication (mMTC), and Ultra Reliable and Low Latency Communications (URLLC).

For example, it is requested for URLLC that a latency target of a user plane is 0.5 ms on UL and is 0.5 ms on DL. For example, a request regarding reliability of one-time transmission of a packet for URLLC is 1×10⁻⁵ with respect to 32 bytes having 1 ms in latency of the user plane.

By the way, in a legacy LTE system, a radio base station transmits DL control information (DCI: Downlink Control Information) to a UE by using a DL control channel (e.g., a Physical Downlink Control Channel (PDCCH) or an Enhanced PDCCH (EPDCCH)). Transmission of the DL control information may be read as transmission of a DL control channel.

The DCI may be scheduling information including at least one of, for example, information that indicates time/frequency resources for scheduling data, information that indicates a transport block size, information that indicates a data modulation scheme, information that indicates an HARQ process identifier, and information that is related to demodulation RS. DCI for scheduling reception of DL data and/or measurement of a DL reference signal may be referred to as a DL assignment or a DL grant. DCI for scheduling transmission of UL data and/or transmission of a UL sounding (measurement) signal may be referred to as a UL grant.

The DL assignment and/or the UL grant may include information related to a resource, a sequence or a transmission format of a channel for transmitting a UL control signal (UCI: Uplink Control Information) such as HARQ-Acknowledgement (ACK) for DL data or channel measurement information (CSI: Channel State Information). Furthermore, DCI for scheduling the UL control signal (UCI: Uplink Control Information) may be defined separately from the DL assignment and the UL grant. Which one of the DL assignment, the UL grant or UCI scheduling the DCI is for may be decided based on which value a value of a specific bit field included in the DCI is, may be decided based on which one of a plurality of given values a DCI payload size is, or may be decided based on in which resource domain the DCI is detected assuming that each DCI is mapped in advance in a different resource domain.

The UE is configured to monitor a set of a given number of DL control channel candidates. In this regard, monitoring refers to, for example, trying decoding each DL control channel of a target DCI format in this set. This decoding will be also referred to as Blind Decoding (BD) or blind detection. The DL candidate channel candidates will be also referred to as BD candidates or (E)PDCCH candidates.

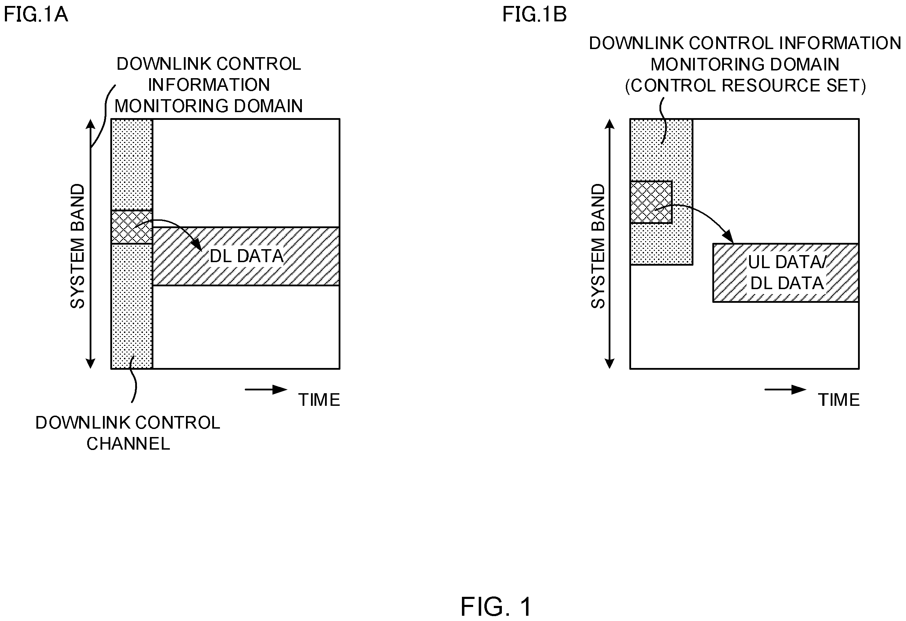

The legacy LTE system transmits a DL control channel (or DL control information) by using an entire system bandwidth (see Fig. 1A). Hence, it has been necessary for the UE to monitor the entire system bandwidth and receive (blind-decode) DL control information in each subframe irrespectively of whether or not DL data is allocated.

By contrast with this, the future radio communication systems are considered to control communication by dynamically or semi-statically configuring a given frequency-domain and time-domain based on communication usage and/or communication environment instead of performing communication by using the entire system bandwidth in a given carrier at all times. For example, the future radio communication systems are considered to control transmission of DL control information by configuring the given frequency-domain and time-domain instead of allocating the DL control information for a certain UE to the entire system band at all times and transmitting the DL control information (see Fig. 1B).

A radio resource including the given frequency-domain and time-domain (e.g., 1 Orthogonal Frequency Division Multiplexing (OFDM) symbol or 2 OFDM symbols) configured to the UE will be also referred to as a CORESET (Control Resource Set), a control resource set, a control subband, a search space set, a search space resource set, a control domain, a control subband or an NR-PDCCH domain.

The control resource set may be configured in a given resource unit, may be configured to a system bandwidth (carrier bandwidth) or may be configured to a maximum bandwidth or less that the user terminal can perform reception processing on. For example, the control resource set can include one or a plurality of RBs (PRBs and/or VRBs) in a frequency direction. In this regard, the RB means, for example, a frequency resource block unit including 12 subcarriers. The UE can monitor DL control information within a range of the control resource set, and control reception. Consequently, the UE does not need to monitor the entire system bandwidth at all times during reception processing of the DL control information, so that it is possible to reduce power consumption.

Furthermore, the control resource set is a frame (also referred to as a box, a set or a mass) of a resource on which the DL control information is mapped or a time resource and/or a frequency resource in which an NR-PDCCH is mapped. Furthermore, the control resource set can be defined based on a resource unit size. For example, one control resource set size can be configured to a size that is an integer multiple of a specific resource unit size. Furthermore, the control resource set may include contiguous or non-contiguous resource units.

The resource unit is a unit of a resource to be allocated to the NR-PDCCH, and may be one of a PRB, a PRB pair, an NR-CCE, an NR-REG and an NR-REG group. The NR-PDCCH will be also referred to as a PDCCH.

At least following points may be configured to BD of a PDCCH at least during a non-initial access.
- The number of PDCCH candidates monitored by the UE per CCE aggregation level or per DCI format (DCI payload) size
- Aggregation level set
- DCI format size

Furthermore, the number of PDCCH candidates may be zero.

Furthermore, BD capability of the UE may be learned by a network (e.g., a radio base station, a transmission/reception point, an eNB or a gNB). Consequently, the network can perform scheduling by taking the BD capability of the UE into account.

However, how the UE performs BD for various radio communication services is not yet determined.

Hence, the inventors of this application have studied a method of the UE for performing BD on the various radio communication services, and conceived the present invention. Embodiments according to the present invention will be described in detail below with reference to the drawings. A radio communication method according to each embodiment may be each applied alone or may be applied in combination.

### (Radio Communication Method)

### <First Embodiment>

The first embodiment of the present invention defines a CORESET (a CORESET type 1 and an eMBB CORESET) for allocating (mapping) a PDCCH for scheduling an eMBB traffic, and a CORESET (a CORESET type 2 and a URLLC CORESET) for allocating a PDCCH for scheduling a URLLC traffic.

### <<UE That Supports Both of eMBB and URLLC>>

A UE that supports both of eMBB and URLLC monitors PDCCH candidates in the CORESET type 1 and PDCCH candidates in the CORESET type 2.

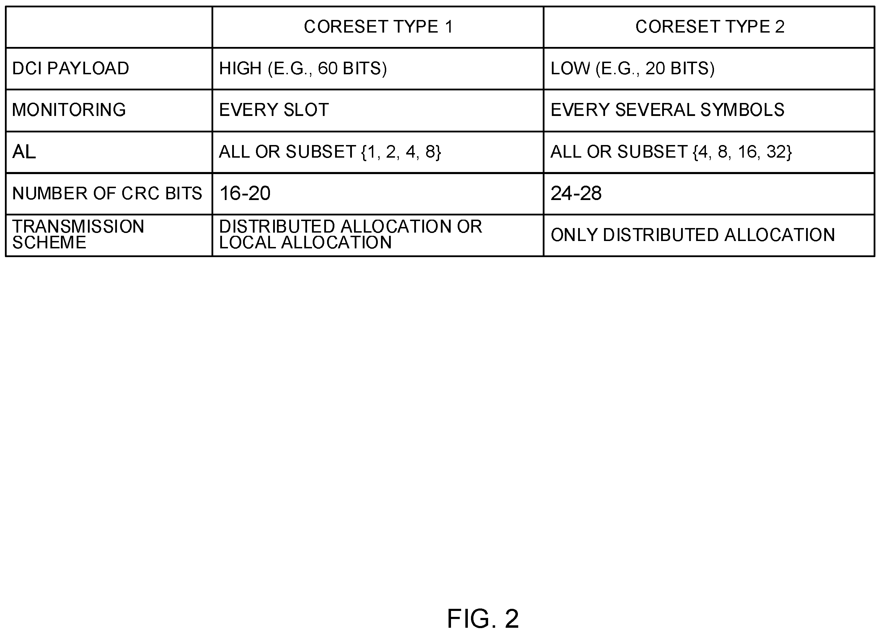

Fig. 2 is a diagram illustrating one example of a definition of the CORESET types 1 and 2.

A PDCCH in the CORESET type 2 may support a smaller DCI payload than that of the PDCCH in the CORESET type 1. For example, a DCI payload length of the CORESET type 1 is 60 bits, and a DCI payload length of the CORESET type 2 is 20 bits. Hence, the PDCCH in the CORESET type 2 enables a lower code rate and higher reliability than those of the PDCCH in the CORESET type 1.

While the CORESET type 1 may be monitored per first time interval, the CORESET type 2 may be monitored per second time interval. The second time interval may be shorter than the first time interval. For example, the first time interval is 1 slot, and the second time interval is some symbols. In addition, the first time interval and the second time interval may be defined by 1 or a plurality of time units. The time unit may be one of a radio frame, a subframe, a slot, a mini slot and a symbol.

The PDCCH in the CORESET type 1 schedules data in the first time interval, and the PDCCH in the CORESET type 2 schedules data in the second time interval shorter than the first time interval, so that the CORESET type 2 can reduce latency compared to the CORESET type 1.

The PDCCH in the CORESET type 2 may support a higher aggregation level than that of the PDCCH in the CORESET type 1. Consequently, the PDCCH in the CORESET type 2 enables a lower code rate and higher reliability than those of the PDCCH in the CORESET type 1.

The PDCCH in the CORESET type 2 may support a longer CRC than that of the PDCCH in the CORESET type 1. Consequently, the PDCCH in the CORESET type 2 can reduce an error detection rate (an error alarm probability or a False alarm probability) compared to the PDCCH in the CORESET type 1, and enables high reliability.

While a transmission scheme (PDCCH mapping) of the CORESET type 1 can configure one of distributed allocation or local allocation, a transmission scheme of the CORESET type 2 may be distributed allocation.

A PDSCH/PUSCH (e.g., eMBB data, and data for which a Gbps class throughput is requested) that needs higher frequency use efficiency than that of a PDSCH/PUSCH to be scheduled by the PDCCH in the CORESET type 2 may be scheduled by the PDCCH in the CORESET type 1.

A PDSCH/PUSCH (e.g., URLLC data, and data for which BLER = 10⁻⁵ is requested) that needs higher reliability than that of a PDSCH/PUSCH to be scheduled by the PDCCH in the CORESET type 1 may be scheduled by the PDCCH in the CORESET type 2.

A PDSCH/PUSCH (non-UE-specific data such as at least one of information that is necessary for an initial access, system information (e.g., Remaining Minimum System Information: RMSI), random access (e.g., Msg 3), and broadcast information (e.g., PBCH)) to be transmitted by a non-UE-specific method may be scheduled by the PDCCH in the CORESET type 1.

Furthermore, the CORESET type 1 may be classified into two subtypes 1-1 and 1-2. The CORESET type 1-1 may be used for scheduling of the non-UE-specific data (e.g., at least one of information that is necessary for an initial access, system information, a random access channel and broadcast information). The CORESET type 1-2 may be used for scheduling of UE-specific data (e.g., traffic).

Parameter sets of the CORESET types 1 and 2 in Fig. 2 may be referred to as parameter sets 1 and 2, respectively. In this case, the CORESET type 1 or 2 may be each a CORESET determined by the parameter sets 1 and 2. Similarly, the PUCCH (or DCI) in the CORESET type 1 or 2 may be each a PUCCH (or DCI) determined by the parameter sets 1 and 2.

The network may configure configurations of the CORESET types 1 and/or 2 (CORESET configurations) to the UE. Information that indicates the CORESET configurations may be notified by higher layer signaling, physical layer signaling or a combination of these.

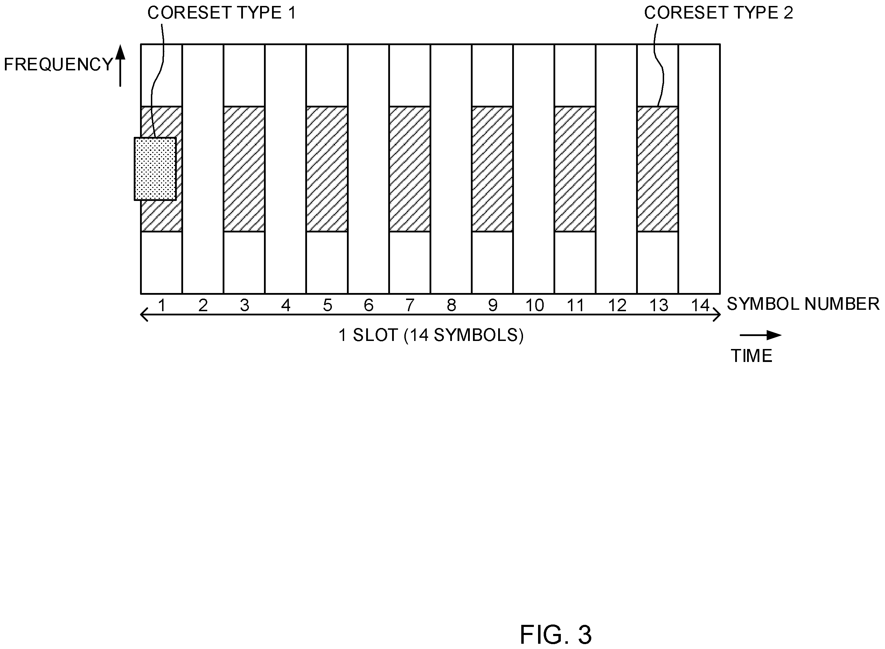

Fig. 3 is a diagram illustrating one example of allocations of the CORESET types 1 and 2. This examples illustrates that 1 slot includes 14 symbols (symbols #1 to #14) and illustrates the allocations of the CORESET types 1 and 2 in 1 slot and a transmission bandwidth. In this example, the first time interval is 1 slot, and the second time interval is 2 symbols. The second time interval may be referred to as a mini slot.

For example, the CORESET type 1 is allocated per slot, and is allocated in one or a plurality of first symbols (e.g., symbol #1) of each slot. For example, the CORESET type 2 is allocated per second time interval of 2 symbols, and is allocated in one or a plurality of first symbols (e.g., symbols #1, #3, #5, #7, #9, #11 and #13) of each second time interval.

Bands of the CORESET type 1 and/or the CORESET type 2 may be part or entirety of the transmission bandwidth. Part or entirety of the band of the CORESET type 1 may overlap part or entirety of the band of the CORESET type 2. Furthermore, the bandwidth of the CORESET type 1 may be different from the bandwidth of the CORESET type 2. For example, the bandwidth of the CORESET type 1 may be narrower than the bandwidth of the CORESET type 2. Furthermore, the band of the CORESET type 1 may be different (separated) from the band of the CORESET type 2.

The UE can receive a PDCCH that is suitable to eMBB by monitoring the PDCCH candidates in the CORESET type 1. In this case, it is possible to realize improvement of frequency use efficiency and improvement of a throughput. The UE can receive a PUCCH that is suitable to URLLC by monitoring the PDCCH candidates in the CORESET type 2. In this case, it is possible to realize reduction of latency and improvement of reliability.

PDSCH and/or PUSCH channel structures depend on whether the PDSCH and/or the PUSCH are scheduled by the PDCCH in the CORESET type 1 or are scheduled by the PDCCH in the CORESET type 2. The PDSCH and/or PUSCH channel structures may be configured as part of the CORESET configurations.

The PUCCH channel structure depends on whether the PDSCH is scheduled by the PDCCH in the CORESET type 1 or is scheduled by the PDCCH in the CORESET type 2. The PUCCH channel structure may be configured as part of the CORESET configurations.

Features of the PDSCH, PUSCH and/or PUCCH channel structures are indicated by the number of DMRS symbols, a DMRS symbol position, a waveform, determination of a Transport Block Size (TBS) and an encoding method. The waveform may be one of, for example, a Discrete Fourier Transform-Spread-Orthogonal Frequency Division Multiplexing (DFT-spread-OFDM) waveform that is a single carrier waveform, and a Cyclic Prefix-Orthogonal Frequency Division Multiplexing (CP-OFDM) waveform that is a multicarrier waveform.

For example, the number of DMRS symbols may be 1 in a channel structure for eMBB, or it may be permitted not to map the DMRS in the first symbol of a slot. For example, the DMRS may be mapped in the first symbol of the slot in a channel structure for URLLC to reduce latency.

The channel structure is based on the CORESET type, so that it is possible to dynamically switch the channel structure that is suitable to service (eMBB or URLLC) and realize performance (frequency use efficiency, latency and reliability) that is suitable to the service.

Next, a difference between parameters in DCI according to the CORESET type will be described.

DCI to be mapped on the CORESET types 1 and 2 includes, for example, following parameters.
- Frequency-domain resource allocation (that indicates, for example, allocation at a subdivided RB group level or a subdivided RB level compared to the CORESET type 2).
- Time-domain resource allocation (that indicates, for example, allocation at a symbol level or a slot level)
- A Modulation and Coding Scheme (MCS) or a code rate (that supports, for example, a higher code rate from 64 Quadrature Amplitude Modulation (QAM) to 256 QAM than that of the CORESET type 2)
- A Multiple-Input and Multiple-Output (MIMO) configuration (that supports MIMO having a larger number of layers from 4 to 8 layers than that of the CORESET type 2)
- A time and/or a resource of a PUCCH that carries HARQ-ACK

DCI to be mapped on the CORESET type 2 includes, for example, following parameters.
- Frequency-domain resource allocation (that indicates, for example, allocation at a more rough RB group level or RB level than those of the CORESET types 1 and 2)
- An MCS or a code rate (that supports, for example, a lower code rate such as Binary Phase Shift Keying (BPSK) or Quadrature Phase Shift Keying (QPSK) than those of the CORESET types 1 and 2)

When time-domain resource allocation in a slot according to URLLC is fixed by a specification, the DCI mapped on the CORESET type 2 may not include the time-domain resource allocation.

When frequency use efficiency of URLLC is not important, the DCI mapped on the CORESET type 2 may not include the MIMO configuration.

When a timing and/or a resource of a PUCCH according to URLLC are fixed by the specification or when a self-contained slot is used for URLLC, the DCI mapped on the CORESET type 2 may not include the timing and/or the resource of the PUCCH.

Thus, the DCI to be mapped on the CORESET types 1 and 2 has the different parameters, and is prevented from having unnecessary information, so that it is possible to suppress an information amount of the DCI.

### <<UE That Supports Only URLLC>>

The UE may support at least URLLC. There are considered some options for the UE that supports only URLLC to monitor a PDCCH. For example, following options 1 and 2 are considered.

Option 1: The UE monitors PDCCH candidates for scheduling non-UE-specific data in the CORESET type 1-1, and PDCCH candidates for scheduling UE-specific data in the CORESET type 2. According to this operation, even if the UE does not support an eMBB traffic, the UE can receive the non-UE-specific data (e.g., information that is necessary to connect with the network) that is common to the UE that supports eMBB before connecting with the network.

Option 2: Similar to the subtypes 1-1 and 1-2 of the CORESET type 1 for eMBB, the CORESET type 2 for URLLC may be classified into subtypes 2-1 and 2-2 for the UE that supports only URLLC. That is, the CORESET type 2-1 may be used for scheduling of non-UE-specific data (that is at least one of, for example, information that is necessary for an initial access, system information, a random access channel and broadcast information), and the CORESET type 2-2 may be used for scheduling of UE-specific data (e.g., traffic).

The UE in a case of the option 2 monitors PDCCH candidates for scheduling non-UE-specific data in the CORESET type 2-1, and PDCCH candidates for scheduling UE-specific data in the CORESET type 2-2. According to this operation, the UE in the case of the option 2 can receive the non-UE-specific data (e.g., information that is necessary to connect with the network) that is common to the UE that supports URLLC before connecting with the network.

By defining the CORESET types respectively for the non-UE-specific data and the UE-specific data, for example, the UE can receive a PDCCH that is suitable respectively before and after connection with the network, so that it is possible to improve performance both before and after the connection with the network. According to the option 1, the radio base station does not need to transmit the non-UE-specific data separately to the UE that supports eMBB and the UE that supports URLLC, so that it is possible to reduce an overhead. According to the option 2, it is possible to schedule the non-UE-specific data by different PDCCHs having different quality and resource amounts for eMBB and URLLC, so that it is possible to perform a control channel operation that is optimized for each service.

### «UE Operation in Case Where Scheduled Data Overlaps CORESET»

The network and the UE may support that signaling of UE capability and/or configuration capability of the network notify and/or configure whether or not the UE can continue monitoring a PDCCH in a CORESET when scheduled data overlaps (collides against) the CORESET. Demodulation and decoding of the scheduled data and monitoring of the PDCCH in the CORESET each require baseband processing. Necessary baseband processing capability differs in cases where both of demodulation and decoding, and monitoring are concurrently performed and only one of demodulation and decoding, and monitoring is performed in an identical resource of an identical carrier.

For example, the UE may perform UE capability signaling of notifying the network of information indicating that it is possible or it is not possible to continue monitoring (overlapping CORESET monitoring) the PDCCH in the CORESET when the scheduled DL data overlaps the CORESET. For example, the network may configure the UE to perform or not to perform overlapping CORESET monitoring according to the UE capability.

For the UE that supports the overlapping CORESET monitoring, the network can schedule DL data in a resource configured (allocated) to the CORESET.

The UE that supports overlapping CORESET monitoring may monitor the PDCCH in the CORESET that overlaps DL data scheduled by a PDCCH before the CORESET. In other words, this UE can concurrently process monitoring of the PDCCH candidates and reception of the DL data. Furthermore, this UE monitors the PDCCH candidates in the CORESET allocated in a time resource on which the DL data is mapped.

In this case, the network may perform rate matching (generate encoded data corresponding to a resource except a resource that overlaps the CORESET among resources of the scheduled DL data) or puncturing (delete the encoded data corresponding to the resource that overlaps the CORESET among the resources of the scheduled data) on the scheduled data around the CORESET. The UE decodes the rate-matched or punctured DL data based on the resource of the scheduled DL data and the resource mapped in the CORESET.

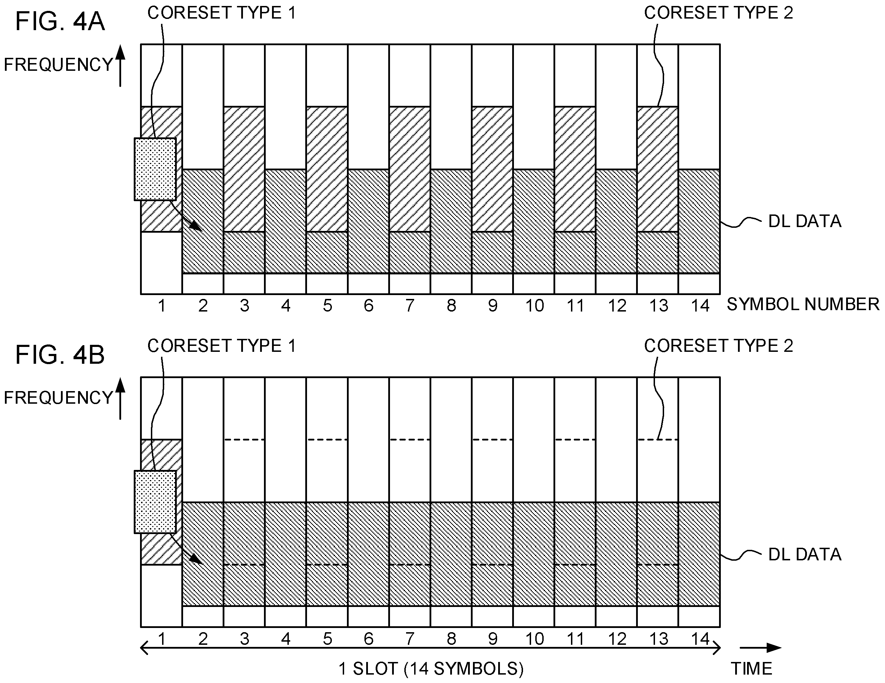

In an example in Fig. 4, the UE supports both of eMBB and URLLC.

Similar to Fig. 3, in an example in Fig. 4A, the network configures the CORESET type 1 to the system #1, and configures the CORESET types 2 to the symbols #1, #3, #5, #7, #9, #11 and #13.

Furthermore, the network transmits a PDCCH for scheduling DL data in the symbols #2 to #14 in the CORESET type 1 of the symbol #1. Hence, the resource of the scheduled DL data overlaps the resource of the CORESET type 2. In this case, the network rate-matches or punctures the scheduled DL data around the CORESET type 2.

The UE that supports overlapping CORESET monitoring monitors the PDCCH candidates of the CORESET types 1 and 2 of the symbol #1. As a result, the UE receives the PDCCH in the CORESET type 1 of the symbol #1, and receives the DL data of the symbols #2 to #14 based on this PDCCH. While receiving the DL data, the UE monitors the PDCCH candidates in the CORESET types 2 in the symbols #3, #5, #7, #9, #11 and #13.

The UE that does not support overlapping CORESET monitoring does not monitor the PDCCH candidates in the CORESETs that overlap the DL data scheduled by the PDCCH before the CORESET. In other words, this UE cannot concurrently process monitoring of the PDCCH and reception of the DL data.

Similar to Fig. 4A, in an example in Fig. 4B, the network configures the CORESET type 1 to the symbol #1, and configures the CORESET types 2 to the symbols #1, #3, #5, #7, #9, #11 and #13. Furthermore, the network transmits the PDCCH for scheduling the DL data in the symbols #2 to #14 in the CORESET type 1 of the symbol #1. Hence, the resource of the scheduled DL data overlaps the resource of the CORESET type 2.

The UE that does not support overlapping CORESET monitoring monitors the PDCCH candidates in the CORESET types 1 and 2 of the symbol #1. As a result, the UE receives the PDCCH in the CORESET type 1 of the symbol #1, and receives the DL data of the symbols #2 to #14 based on this PDCCH. While receiving the DL data, the UE does not monitor the PDCCH candidates in the CORESET types 2 in the symbols #3, #5, #7, #9, #11 and #13.

In Fig. 4B, the CORESET types 2 (the symbols #3, #5, #7, #9, #11 and #13) that are not hatched are not monitored by the UE.

Hence, for the UE that does not support overlapping CORESET monitoring, the network may not schedule the DL data to a resource configured to the CORESET.

When, for example, URLLC is prioritized for the UE that does not support overlapping CORESET monitoring, the network may not schedule the DL data by using the CORESET type 1. This is because, when the DL data of eMBB is scheduled, this UE stops monitoring the PDCCH while receiving the DL data.

Similar to the symbol #1 in Figs. 4A and 4B, the CORESET types 1 and 2 may share the resources. Furthermore, the CORESET types 1 and 2 may not share the resources. For example, the band of the CORESET type 1 and the band of the CORESET type 2 may be different.

By using information indicating whether or not the UE supports overlapping CORESET monitoring, the network and the UE can determine resources of the PDCCH and the DL data according to UE capability.

### <Second Embodiment>

The second embodiment of the present invention will describe the number of times of BD executed by a UE.

Irrespectively of whether or not monitoring of one or some CORESETs is stopped, the number of times of BD (the number of PDCCH candidates) in the provided CORESET may be fixed. The number of times of BD may be defined per CORESET type.

Information indicating the number of times of BD of each CORESET type may be defined by a specification, may be notified as UE capability from the UE to a network or may be configured from the network to the UE based on the UE capability.

The UE that does not have capability for monitoring a PDCCH (overlapping CORESET monitoring) over resources on which DL data has been scheduled does not monitor the PDCCH in some CORESETS in some cases depending on whether or not there is the DL data in a slot. However, the number of times of BD in the provided CORESET does not change. That is, the UE that does not support overlapping CORESET monitoring performs BD the defined number of times in CORESETs that do not overlap the scheduled DL data, and does not perform BD in CORESETs that overlap the scheduled DL data. Hence, the number of times of BD in one slot is not fixed.

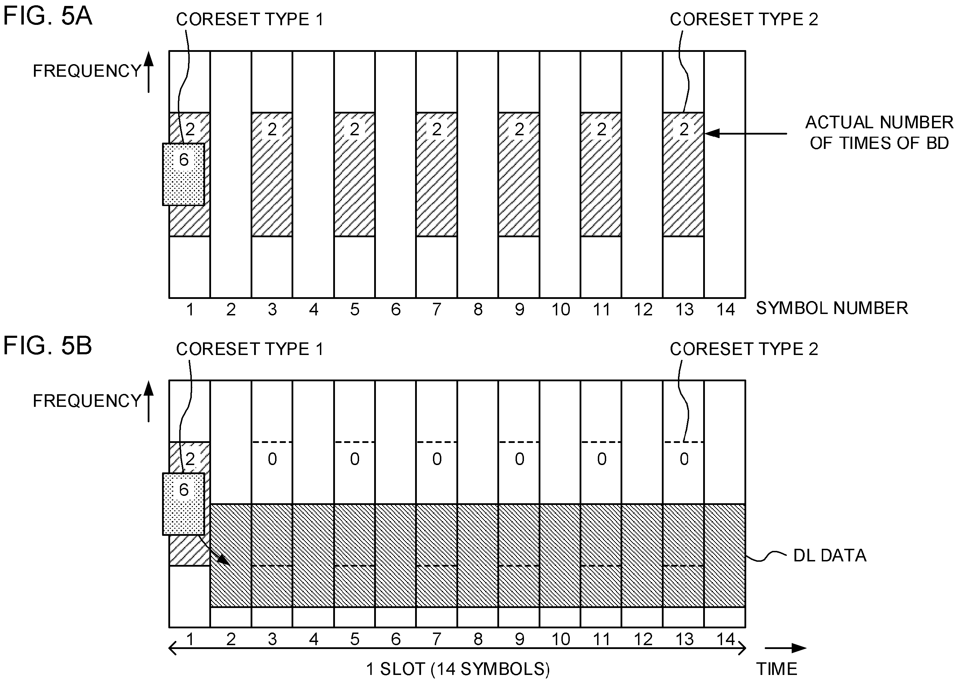

Fig. 5 is a diagram illustrating one example of the number of times (the number of execution times) of BD actually performed by the UE. The number of times of BD of one CORESET type 1 and the number of times of BD of one CORESET type 2 are defined for this UE.

In this example, the number of times of BD of the CORESET type 1 is 6, and the number of times of BD of the CORESET type 2 is 2 for the UE.

Similar to Fig. 3, in an example in Fig. 5A, the network configures the CORESET type 1 to a symbol #1, and configures the CORESET types 2 to symbols #1, #3, #5, #7, #9, #11 and #13.

In this case, the number of execution times of BD in each CORESET is equal between both of UEs that support overlapping CORESET monitoring and UEs that do not support overlapping CORESET.

That is, as illustrated in Fig. 5A, the UE performs BD 6 times in each CORESET type 1 and performs BD 2 times in each CORESET type 2 according to the number of times of BD of each CORESET type. In this case, the UE performs BD 20 times in one slot.

Similar to Fig. 4B, in an example in Fig. 5B, the network configures the CORESET type 1 to the symbol #1, and configures the CORESET types 2 to the symbols #1, #3, #5, #7, #9, #11 and #13. Furthermore, the network transmits a PDCCH for scheduling DL data in the symbols #2 to #14 in the CORESET type 1 of the symbol #1. Hence, a resource of the scheduled DL data and the resource of the CORESET type 2 overlap.

The UE that does not support overlapping CORESET monitoring receives the DL data in the symbols #2 to #14, and, while receiving the DL data, the UE does not monitor PDCCH candidates in the CORESET types 2 in the symbols #3, #5, #7, #9, #11 and #13.

In this case, the number of execution times of BD of the UE that does not support overlapping CORESET monitoring is a number indicated in each CORESET in Fig. 5B.

That is, the UE performs BD 6 times in the CORESET type 1 of the symbol #1 and performs BD 2 times in the CORESET type 2 of the symbol #1 according to the number of times of BD of each CORESET type. The CORESET type 2 is not configured to the symbols #3, #5, #7, #9, #11 and #13, and therefore the UE does not perform BD. In this case, the UE performs BD 8 times in one slot. That is, in the UE that does not support overlapping CORESET monitoring, the number of execution times of BD in 1 slot changes according to whether or not DL data overlaps a CORESET.

On the other hand, when the DL data overlaps the CORESET as in Fig. 5B, the number of times of BD actually performed by the UE that supports overlapping CORESET monitoring is equal to the number of times of BD indicated in each CORESET in above-described Fig. 5A. That is, in the UE that supports overlapping CORESET monitoring, the number of execution times of BD in 1 slot does not change according to whether or not the DL overlaps the CORESET.

According to the above second embodiment, the number of times of BD is defined per CORESET type, so that the UE can perform BD an appropriate number of times in each CORESET.

### <Third Embodiment>

The third embodiment of the present invention will describe signaling of BD capability of a UE.

The UE may support UE capability signaling of notifying a network of information indicating a maximum number of times of BD that can be executed in 1 symbol, 1 CORESET, 1 slot or 1 Search Space (SS). This maximum number may be explicitly notified or may be implicitly notified by other information.

When, for example, the maximum number of times of BD of 1 symbol is notified, as long as the number of times of BD of 1 symbol does not exceed the maximum number, the UE can decode PDCCH candidates according to a configuration of the CORESET or the search space.

When, for example, the maximum number of 1 symbol is defined and a value of the maximum number is 10, the network can configure 10 times of BD (PDCCH candidates) per symbol to the UE, and configure 140 times of BD (PDCCH candidates) per slot to the UE.

When, for example, the maximum number of 1 slot is defined and a value of the maximum number is 40, the network can configure 40 times of BD (PDCCH candidates) per slot to the UE.

The UE may support UE capability signaling of notifying the maximum number of times of BD that can be executed in 1 symbol, and the maximum number of times of BD that can be executed in 1 CORESET or 1 SS. As long as, for example, the number of times of BD of 1 symbol does not exceed the maximum number and the number of times of BD of 1 CORESET or 1 SS does not exceed the maximum number, the UE can decode the PDCCH candidates according to a configuration of the CORESET or the search space.

The UE may support UE capability signaling of notifying the maximum number of times of BD that can be executed in 1 symbol, and the maximum number of times of BD that can be executed in 1 slot. As long as, for example, the number of times of BD of 1 symbol does not exceed the maximum number and the number of times of BD of 1 slot does not exceed the maximum number, the UE can decode the PDCCH candidates according to the configuration of the CORESET or the search space.

The UE may support UE capability signaling of notifying the maximum number of times of BD that can be executed in 1 CORESET or 1 SS, and the maximum number of times of BD that can be executed in a slot. As long as, for example, the number of times of BD of 1 CORESET or 1 SS does not exceed the maximum number and the number of times of BD of 1 slot does not exceed the maximum number, the UE can decode the PDCCH candidates according to the configuration of the CORESET or the search space.

The UE may notify the network of overlapping CORESET monitoring capability and/or UE capability information indicating the maximum number of times of BD.

According to the above third embodiment, by notifying the network of BD capability of the UE, the network can configure an appropriate number of PDCCH candidates to the UE, and the UE can appropriately perform BD.

### (Radio Communication System)

The configuration of the radio communication system according to one embodiment of the present invention will be described below. This radio communication system uses one or a combination of the radio communication method according to each of the above embodiments of the present invention to perform communication.

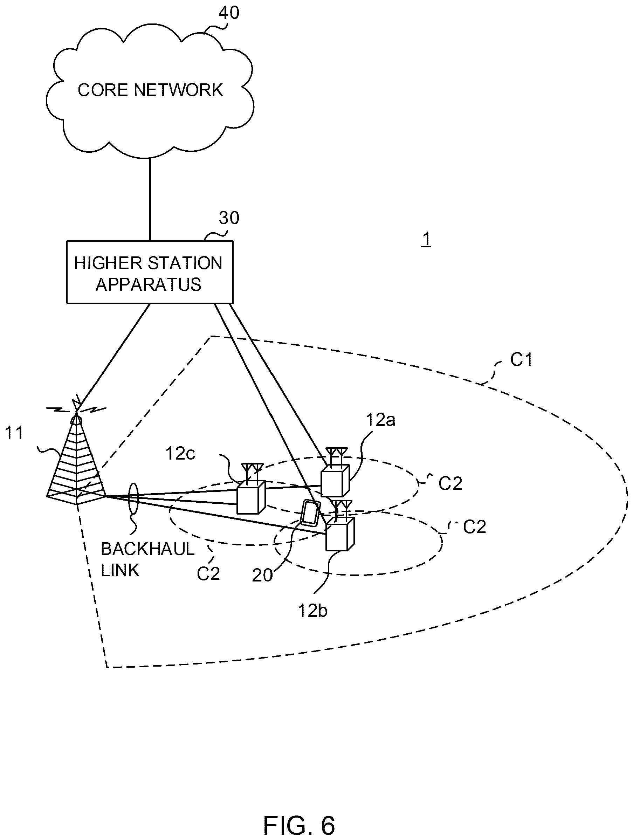

Fig. 6 is a diagram illustrating one example of a schematic configuration of the radio communication system according to the one embodiment of the present invention. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system.

In this regard, the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), New Radio (NR), Future Radio Access (FRA) and the New Radio Access Technology (New-RAT), or a system that realizes these techniques.

The radio communication system 1 includes a radio base station 11 that forms a macro cell C1 of a relatively wide coverage, and radio base stations 12 (12a to 12c) that are located in the macro cell C1 and form small cells C2 narrower than the macro cell C1. Furthermore, a user terminal 20 is located in the macro cell C1 and each small cell C2. An arrangement and the numbers of respective cells and the user terminals 20 are not limited to those illustrated in Fig. 6.

The user terminal 20 can connect with both of the radio base station 11 and the radio base stations 12. The user terminal 20 is assumed to concurrently use the macro cell C1 and the small cells C2 by CA or DC. Furthermore, the user terminal 20 can apply CA or DC by using a plurality of cells (CCs) (e.g., five CCs or less or six CCs or more).

The user terminal 20 and the radio base station 11 can communicate by using a carrier (also referred to as a legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz or 5 GHz) or may use the same carrier as that used between the user terminal 20 and the radio base station 11. In this regard, a configuration of the frequency band used by each radio base station is not limited to this.

The radio base station 11 and each radio base station 12 (or the two radio base stations 12) can be configured to be connected by way of wired connection (e.g., optical fibers compliant with a Common Public Radio Interface (CPRI) or an X2 interface) or radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal (mobile station) but also a fixed communication terminal (fixed station).

The radio communication system 1 applies Orthogonal Frequency-Division Multiple Access (OFDMA) to downlink and Single Carrier-Frequency Division Multiple Access (SC-FDMA) and/or OFDMA to uplink as radio access schemes.

OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into a band including one or contiguous resource blocks per terminal and causes a plurality of terminals to use respectively different bands to reduce an inter-terminal interference. In this regard, uplink and downlink radio access schemes are not limited to a combination of these, and other radio access schemes may be used.

The radio communication system 1 uses a downlink shared channel (PDSCH: Physical Downlink Shared Channel) shared by each user terminal 20, a broadcast channel (PBCH: Physical Broadcast Channel) and a downlink L1/L2 control channel as downlink channels. User data, higher layer control information and System Information Blocks (SIBs) are conveyed on the PDSCH. Furthermore, Master Information Blocks (MIBs) are conveyed on the PBCH.

The downlink L1/L2 control channel includes a Physical Downlink Control Channel (PDCCH), an Enhanced Physical Downlink Control Channel (EPDCCH), a Physical Control Format Indicator Channel (PCFICH), and a Physical Hybrid-ARQ Indicator Channel (PHICH). Downlink Control Information (DCI) including scheduling information of the PDSCH and/or the PUSCH is conveyed on the PDCCH.

In addition, the scheduling information may be notified by the DCI. For example, DCI for scheduling DL data reception may be referred to as a DL assignment, and DCI for scheduling UL data transmission may be referred to as a UL grant.

The number of OFDM symbols used for the PDCCH is conveyed on the PCFICH. Transmission acknowledgement information (also referred to as, for example, retransmission control information, HARQ-ACK or ACK/NACK) of a Hybrid Automatic Repeat reQuest (HARQ) for the PUSCH is conveyed on the PHICH. The EPDCCH is subjected to frequency division multiplexing with the PDSCH (downlink shared data channel) and is used to convey DCI similar to the PDCCH.

The radio communication system 1 uses an uplink shared channel (PUSCH: Physical Uplink Shared Channel) shared by each user terminal 20, an uplink control channel (PUCCH: Physical Uplink Control Channel), and a random access channel (PRACH: Physical Random Access Channel) as uplink channels. User data and higher layer control information are conveyed on the PUSCH. Furthermore, downlink radio quality information (CQI: Channel Quality Indicator), transmission acknowledgement information and a Scheduling Request (SR) are conveyed on the PUCCH. A random access preamble for establishing connection with a cell is conveyed on the PRACH.

The radio communication system 1 conveys a Cell-specific Reference Signal (CRS), a Channel State Information-Reference Signal (CSI-RS), a DeModulation Reference Signal (DMRS) and a Positioning Reference Signal (PRS) as downlink reference signals. Furthermore, the radio communication system 1 conveys a Sounding Reference Signal (SRS) and a DeModulation Reference Signal (DMRS) as uplink reference signals. In this regard, the DMRS may be referred to as a user terminal-specific reference signal (UE-specific Reference Signal). Furthermore, a reference signal to be conveyed is not limited to these.

### (Radio Base Station)

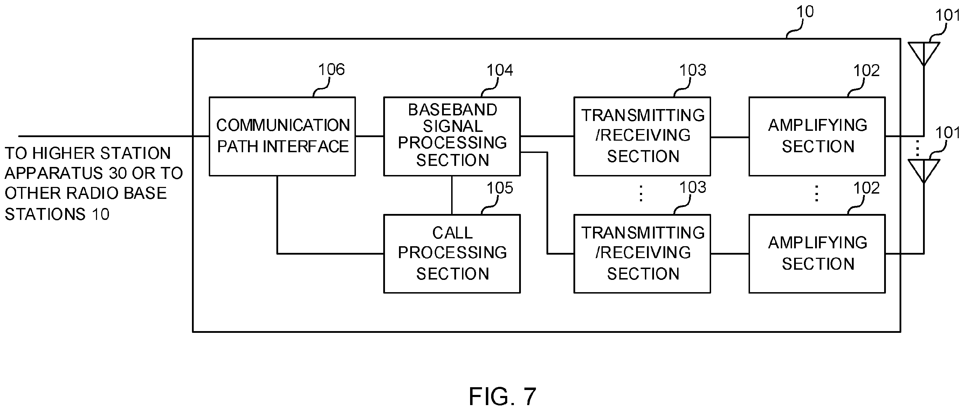

Fig. 7 is a diagram illustrating one example of an overall configuration of the radio base station according to the one embodiment of the present invention. The radio base station 10 includes pluralities of transmission/reception antennas 101, amplifying sections 102 and transmission/reception sections 103, a baseband signal processing section 104, a call processing section 105 and a channel interface 106. In this regard, the radio base station 10 only needs to be configured to include one or more of each of the transmission/reception antennas 101, the amplifying sections 102 and the transmission/reception sections 103.

User data transmitted from the radio base station 10 to the user terminal 20 on downlink is input from the higher station apparatus 30 to the baseband signal processing section 104 via the channel interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., HARQ transmission processing), and transmission processing such as scheduling, transmission format selection, channel coding, Inverse Fast Fourier Transform (IFFT) processing, and precoding processing on the user data, and transfers the user data to each transmission/reception section 103. Furthermore, the baseband signal processing section 104 performs transmission processing such as channel coding and inverse fast Fourier transform on a downlink control signal, too, and transfers the downlink control signal to each transmission/reception section 103.

Each transmission/reception section 103 converts a baseband signal precoded and output per antenna from the baseband signal processing section 104 into a radio frequency band, and transmits a radio frequency signal. The radio frequency signal subjected to frequency conversion by each transmission/reception section 103 is amplified by each amplifying section 102, and is transmitted from each transmission/reception antenna 101. The transmission/reception sections 103 can be composed of transmitters/receivers, transmission/reception circuits or transmission/reception apparatuses described based on a common knowledge in a technical field according to the present invention. In this regard, the transmission/reception sections 103 may be composed as an integrated transmission/reception section or may be composed of transmission sections and reception sections.

Meanwhile, each amplifying section 102 amplifies a radio frequency signal received by each transmission/reception antenna 101 as an uplink signal. Each transmission/reception section 103 receives the uplink signal amplified by each amplifying section 102. Each transmission/reception section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, reception processing of MAC retransmission control, and reception processing of an RLC layer and a PDCP layer on user data included in the input uplink signal, and transfers the user data to the higher station apparatus 30 via the channel interface 106. The call processing section 105 performs call processing (configuration and release) of a communication channel, state management of the radio base station 10, and radio resource management.

The channel interface 106 transmits and receives signals to and from the higher station apparatus 30 via a given interface. Furthermore, the channel interface 106 may transmit and receive (backhaul signaling) signals to and from another radio base station 10 via an inter-base station interface (e.g., optical fibers compliant with the Common Public Radio Interface (CPRI) or the X2 interface).

Furthermore, each transmission/reception section 103 may transmit a DL control channel (e.g., PDCCH), a DL shared channel (e.g., PDSCH), a UL control channel (e.g., PUCCH) and a UL shared channel (e.g., PUSCH).

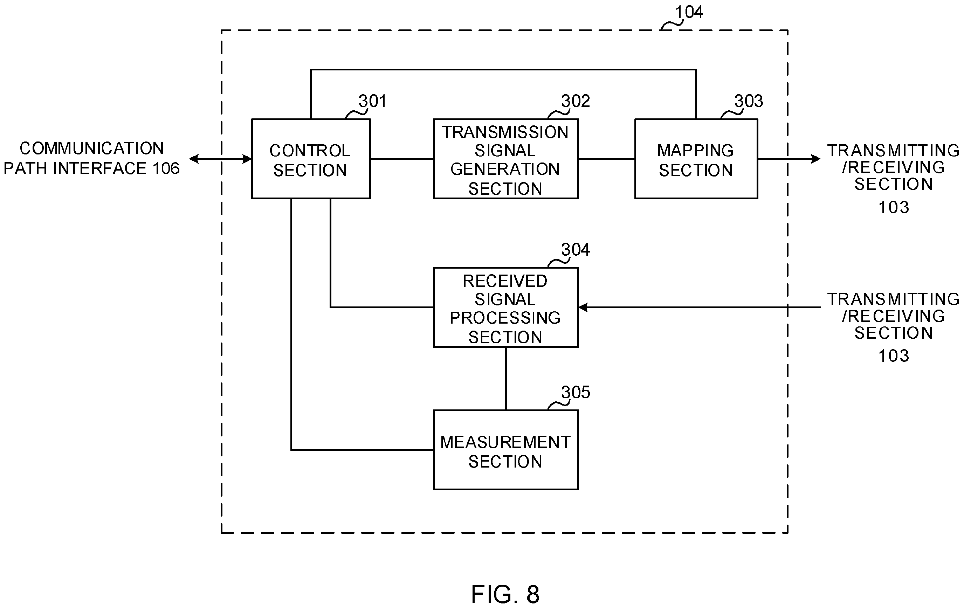

Fig. 8 is a diagram illustrating one example of a function configuration of the radio base station according to the one embodiment of the present invention. In addition, this example mainly illustrates function blocks of characteristic portions according to the present embodiment, and assumes that the radio base station 10 includes other function blocks, too, that are necessary for radio communication.

The baseband signal processing section 104 includes at least a control section (scheduler) 301, a transmission signal generating section 302, a mapping section 303, a received signal processing section 304 and a measurement section 305. In addition, these components only need to be included in the radio base station 10, and part or all of the components may not be included in the baseband signal processing section 104.

The control section (scheduler) 301 controls the entire radio base station 10. The control section 301 can be composed of a controller, a control circuit or a control apparatus described based on the common knowledge in the technical field according to the present invention.

The control section 301 controls, for example, signal generation of the transmission signal generating section 302 and signal allocation of the mapping section 303. Furthermore, the control section 301 controls signal reception processing of the received signal processing section 304 and signal measurement of the measurement section 305.

The control section 301 controls scheduling (e.g., resource allocation) of system information, a downlink data signal (e.g., a signal transmitted on the PDSCH), and a downlink control signal (e.g., a signal that is transmitted on the PDCCH and/or the EPDCCH and is, for example, transmission acknowledgement information). Furthermore, the control section 301 controls generation of a downlink control signal and a downlink data signal based on a result obtained by deciding whether or not it is necessary to perform retransmission control on an uplink data signal. Furthermore, the control section 301 controls scheduling of synchronization signals (e.g., a Primary Synchronization Signal (PSS)/a Secondary Synchronization Signal (SSS)) and downlink reference signals (e.g., a CRS, a CSI-RS and a DMRS).

Furthermore, the control section 301 may configure a first control resource set (e.g., CORESET type 1) and a second control resource set (e.g., CORESET type 2) to the UE.

Furthermore, the control section 301 may control transmission or reception of information (e.g., a notification from the UE or a configuration from a network) indicating whether or not the UE monitors DL control channel candidates in a control resource set allocated in a time resource on which DL data is mapped.

Furthermore, the control section 301 may receive from the UE the maximum number of DL control channel candidates in a specific resource unit (e.g., a symbol, a CORESET, a slot or a search space).

The transmission signal generating section 302 generates a downlink signal (such as a downlink control signal, a downlink data signal or a downlink reference signal) based on an instruction from the control section 301, and outputs the downlink signal to the mapping section 303. The transmission signal generating section 302 can be composed of a signal generator, a signal generating circuit or a signal generating apparatus described based on the common knowledge in the technical field according to the present invention.

The transmission signal generating section 302 generates, for example, a DL assignment for notifying downlink data allocation information, and/or a UL grant for notifying uplink data allocation information based on the instruction from the control section 301. The DL assignment and the UL grant are both DCI, and conform to a DCI format. Furthermore, the transmission signal generating section 302 performs encoding processing and modulation processing on a downlink data signal according to a code rate and a modulation scheme determined based on Channel State Information (CSI) from each user terminal 20.

The mapping section 303 maps the downlink signal generated by the transmission signal generating section 302, on a given radio resource based on the instruction from the control section 301, and outputs the downlink signal to each transmission/reception section 103. The mapping section 303 can be composed of a mapper, a mapping circuit or a mapping apparatus described based on the common knowledge in the technical field according to the present invention.

The received signal processing section 304 performs reception processing (e.g., demapping, demodulation and decoding) on a received signal input from each transmission/reception section 103. In this regard, the received signal is, for example, an uplink signal (such as an uplink control signal, an uplink data signal or an uplink reference signal) transmitted from the user terminal 20. The received signal processing section 304 can be composed of a signal processor, a signal processing circuit or a signal processing apparatus described based on the common knowledge in the technical field according to the present invention.

The received signal processing section 304 outputs information decoded by the reception processing to the control section 301. When, for example, receiving the PUCCH including HARQ-ACK, the received signal processing section 304 outputs the HARQ-ACK to the control section 301. Furthermore, the received signal processing section 304 outputs the received signal and/or the signal after the reception processing to the measurement section 305.

The measurement section 305 performs measurement related to the received signal. The measurement section 305 can be composed of a measurement instrument, a measurement circuit or a measurement apparatus described based on the common knowledge in the technical field according to the present invention.

For example, the measurement section 305 may perform Radio Resource Management (RRM) measurement or Channel State Information (CSI) measurement based on the received signal. The measurement section 305 may measure, for example, received power (e.g., Reference Signal Received Power (RSRP)), received quality (e.g., Reference Signal Received Quality (RSRQ) or a Signal to Interference plus Noise Ratio (SINR)), a signal strength (e.g., Received Signal Strength Indicator (RSSI)) or channel state information (e.g., CSI). The measurement section 305 may output a measurement result to the control section 301.

### (User Terminal)

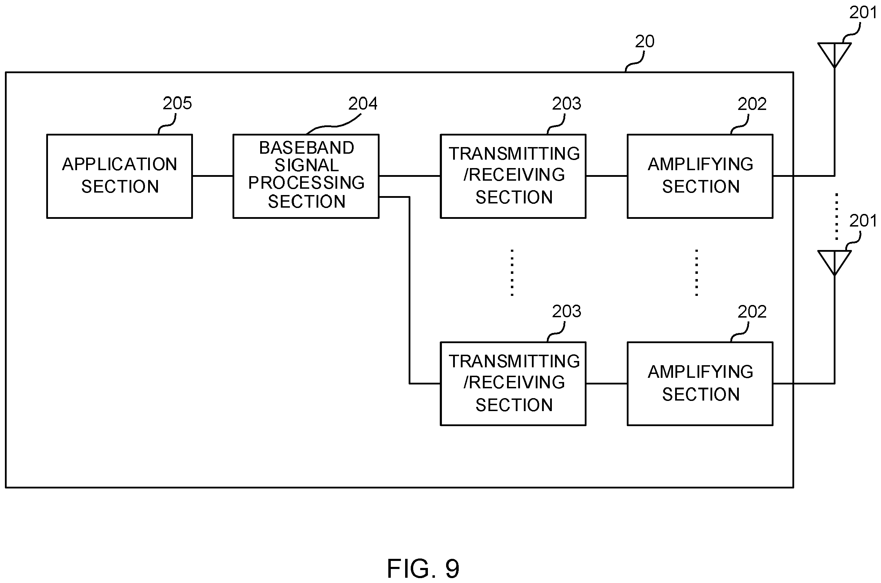

Fig. 9 is a diagram illustrating one example of an overall configuration of the user terminal according to the one embodiment of the present invention. The user terminal 20 includes pluralities of transmission/reception antennas 201, amplifying sections 202 and transmission/reception sections 203, a baseband signal processing section 204 and an application section 205. In this regard, the user terminal 20 only needs to be configured to include one or more of each of the transmission/reception antennas 201, the amplifying sections 202 and the transmission/reception sections 203.

Each amplifying section 202 amplifies a radio frequency signal received at each transmission/reception antenna 201. Each transmission/reception section 203 receives a downlink signal amplified by each amplifying section 202. Each transmission/reception section 203 performs frequency conversion on the received signal into a baseband signal, and outputs the baseband signal to the baseband signal processing section 204. The transmission/reception sections 203 can be composed of transmitters/receivers, transmission/reception circuits or transmission/reception apparatuses described based on the common knowledge in the technical field according to the present invention. In this regard, the transmission/reception sections 203 may be composed as an integrated transmission/reception section or may be composed of transmission sections and reception sections.

The baseband signal processing section 204 performs FFT processing, error correcting decoding, and reception processing of retransmission control on the input baseband signal. The baseband signal processing section 204 transfers downlink user data to the application section 205. The application section 205 performs processing related to layers higher than a physical layer and an MAC layer. Furthermore, the baseband signal processing section 204 may transfer broadcast information of the downlink data, too, to the application section 205.

On the other hand, the application section 205 inputs uplink user data to the baseband signal processing section 204. The baseband signal processing section 204 performs transmission processing of retransmission control (e.g., HARQ transmission processing), channel coding, precoding, Discrete Fourier Transform (DFT) processing and IFFT processing on the uplink user data, and transfers the uplink user data to each transmission/reception section 203. Each transmission/reception section 203 converts the baseband signal output from the baseband signal processing section 204 into a radio frequency band, and transmits a radio frequency signal. The radio frequency signal subjected to the frequency conversion by each transmission/reception section 203 is amplified by each amplifying section 202, and is transmitted from each transmission/reception antenna 201.

Furthermore, each transmission/reception section 203 may receive the DL control channel (e.g., PDCCH). Furthermore, each transmission/reception section 203 may receive the DL shared channel (e.g., PDSCH), the UL control channel (e.g., PUCCH), and the UL shared channel (e.g., PUSCH).

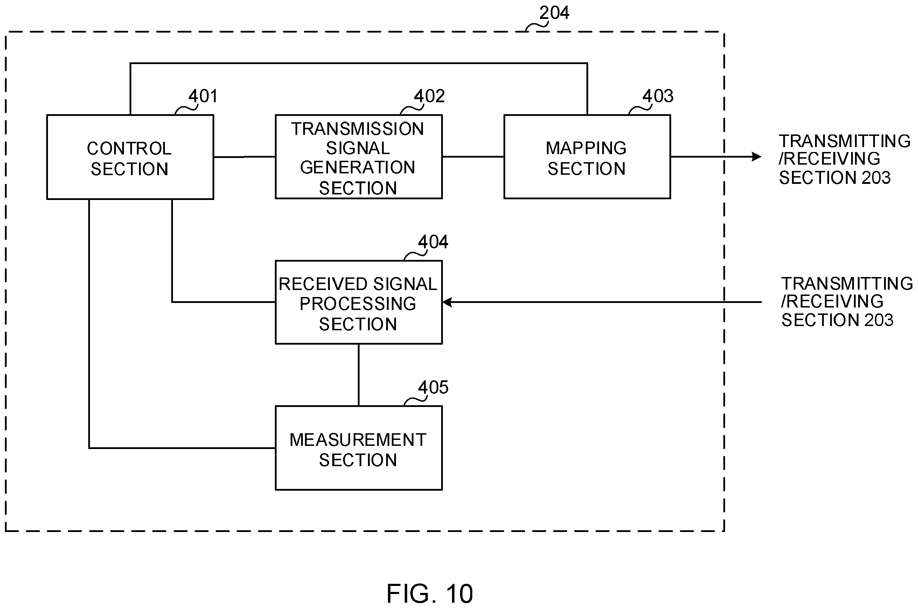

Fig. 10 is a diagram illustrating one example of a function configuration of the user terminal according to the one embodiment of the present invention. In addition, this example mainly illustrates function blocks of characteristic portions according to the present embodiment, and assumes that the user terminal 20 includes other function blocks, too, that are necessary for radio communication.

The baseband signal processing section 204 of the user terminal 20 includes at least a control section 401, a transmission signal generating section 402, a mapping section 403, a received signal processing section 404 and a measurement section 405. In addition, these components only need to be included in the user terminal 20, and part or all of the components may not be included in the baseband signal processing section 204.

The control section 401 controls the entire user terminal 20. The control section 401 can be composed of a controller, a control circuit or a control apparatus described based on the common knowledge in the technical field according to the present invention.

The control section 401 controls, for example, signal generation of the transmission signal generating section 402 and signal allocation of the mapping section 403. Furthermore, the control section 401 controls signal reception processing of the received signal processing section 404 and signal measurement of the measurement section 405.

The control section 401 obtains, from the received signal processing section 404, a downlink control signal and a downlink data signal transmitted from the radio base station 10. The control section 401 controls generation of an uplink control signal and/or an uplink data signal based on a result obtained by deciding whether or not it is necessary to perform retransmission control on the downlink control signal and/or the downlink data signal.

The transmission signal generating section 402 generates an uplink signal (such as an uplink control signal, an uplink data signal or an uplink reference signal) based on an instruction from the control section 401, and outputs the uplink signal to the mapping section 403. The transmission signal generating section 402 can be composed of a signal generator, a signal generating circuit or a signal generating apparatus described based on the common knowledge in the technical field according to the present invention.

The transmission signal generating section 402 generates an uplink control signal related to transmission acknowledgement information and Channel State Information (CSI) based on, for example, the instruction from the control section 401. Furthermore, the transmission signal generating section 402 generates an uplink data signal based on the instruction from the control section 401. When, for example, the downlink control signal notified from the radio base station 10 includes a UL grant, the transmission signal generating section 402 is instructed by the control section 401 to generate an uplink data signal.

The mapping section 403 maps the uplink signal generated by the transmission signal generating section 402, on a radio resource based on the instruction from the control section 401, and outputs the uplink signal to each transmission/reception section 203. The mapping section 403 can be composed of a mapper, a mapping circuit or a mapping apparatus described based on the common knowledge in the technical field according to the present invention.

The received signal processing section 404 performs reception processing (e.g., demapping, demodulation and decoding) on the received signal input from each transmission/reception section 203. In this regard, the received signal is, for example, a downlink signal (such as a downlink control signal, a downlink data signal or a downlink reference signal) transmitted from the radio base station 10. The received signal processing section 404 can be composed of a signal processor, a signal processing circuit or a signal processing apparatus described based on the common knowledge in the technical field according to the present invention. Furthermore, the received signal processing section 404 can compose the reception section according to the present invention.

The received signal processing section 404 outputs information decoded by the reception processing to the control section 401. The received signal processing section 404 outputs, for example, broadcast information, system information, RRC signaling and DCI to the control section 401. Furthermore, the received signal processing section 404 outputs the received signal and/or the signal after the reception processing to the measurement section 405.

The measurement section 405 performs measurement related to the received signal. The measurement section 405 can be composed of a measurement instrument, a measurement circuit or a measurement apparatus described based on the common knowledge in the technical field according to the present invention.

For example, the measurement section 405 may perform RRM measurement or CSI measurement based on the received signal. The measurement section 405 may measure received power (e.g., RSRP), received quality (e.g., RSRQ or an SINR), a signal strength (e.g., RSSI) or channel information (e.g., CSI). The measurement section 405 may output a measurement result to the control section 401.

Furthermore, the control section 401 may control monitoring of the DL control channel candidates. Furthermore, the control section 401 may control monitoring of the DL control channel candidates in the first control resource set (e.g., CORESET type 1) configured by the network, and monitoring of the DL control channel candidates in the second control resource set (e.g., CORESET type 2) configured by the network. One of an aggregation level, a DL control information payload length, a CRC length and a time interval may be different between the DL control channel in the first control resource and the DL control channel in the second control resource set.

Furthermore, a structure of a channel (e.g., the PDSCH or the PUSCH) to be scheduled on the DL control channel may be based on which one of the first control resource set and the second control resource set the DL control channel for scheduling the channel is mapped.

Furthermore, the control section 401 may control transmission or reception of information (e.g., a notification from the UE or a configuration from the network) indicating whether or not to monitor the DL control channel candidates in the control resource set allocated in a time resource on which the DL data is mapped.

Furthermore, when a plurality of control resource sets are configured and each control resource set is the first control resource set or the second control resource set, the number of DL control channel candidates monitored in each control resource set may be a constant.

Furthermore, the control section 401 may control notifying the network of the information indicating the maximum number of DL control channel candidates in a specific resource unit (e.g., a symbol, a CORESET, a slot or a search space).

Furthermore, a structure of the UL control channel (e.g., PUCCH) may be based on which one of the first control resource set and the second control resource set the DL control channel (e.g., PDCCH) for scheduling the DL shared channel (e.g., PDSCH) is mapped.

Furthermore, the control section 401 may control monitoring of DL control channel candidates in a control resource set (e.g., CORESET type 1-1) configured by the network, and monitoring of DL control channel candidates in a control resource set (e.g., CORESET type 1-2) configured by the network.

Furthermore, the control section 401 may control monitoring of DL control channel candidates in a control resource set (e.g., CORESET type 1-2) configured by the network, and monitoring of DL control channel candidates in a control resource set (e.g., CORESET type 2) configured by the network.

Furthermore, the control section 401 may control monitoring of DL control channel candidates in a control resource set (e.g., CORESET type 2-1) configured by the network, and monitoring of DL control channel candidates in a control resource set (e.g., CORESET type 2-2) configured by the network.

The DL control information in the first control resource set (e.g., CORESET 1-2) includes one of information indicating the time-domain resource allocation, information indicating the MIMO configuration, and information indicating a timing and/or a resource of a PUCCH that carries HARQ-ACK. The DL control information in the second control resource set (e.g., CORESET type 2) may not include the information indicating the time-domain resource allocation, the information indicating the MIMO configuration, and the information indicating the timing and/or the resource of a PUCCH that carries HARQ-ACK.

### (Hardware Configuration)

In addition, the block diagrams used to describe the above embodiments illustrate blocks in function units. These function blocks (components) are realized by an optional combination of hardware and/or software. Furthermore, a method for realizing each function block is not limited in particular. That is, each function block may be realized by using one physically and/or logically coupled apparatus or may be realized by using a plurality of these apparatuses formed by connecting two or more physically and/or logically separate apparatuses directly and/or indirectly (by using, for example, wired connection and/or radio connection).

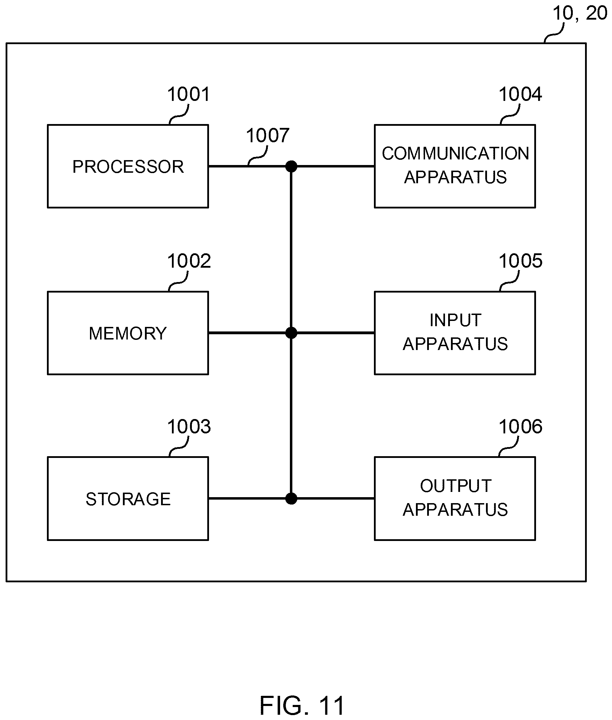

For example, the radio base station and the user terminal according to the one embodiment of the present invention may function as computers that perform processing of the radio communication method according to the present invention. Fig. 11 is a diagram illustrating one example of the hardware configurations of the radio base station and the user terminal according to the one embodiment of the present invention. The above radio base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the radio base station 10 and the user terminal 20 may be configured to include one or a plurality of apparatuses illustrated in Fig. 11 or may be configured without including part of the apparatuses.

For example, Fig. 11 illustrates the only one processor 1001. However, there may be a plurality of processors. Furthermore, processing may be executed by one processor or processing may be executed by one or more processors concurrently, successively or by using another method. In addition, the processor 1001 may be implemented by one or more chips.

Each function of the radio base station 10 and the user terminal 20 is realized by, for example, causing hardware such as the processor 1001 and the memory 1002 to read given software (program), and thereby causing the processor 1001 to perform an operation, and control communication via the communication apparatus 1004 and reading and/or writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above baseband signal processing section 104 (204) and call processing section 105 may be realized by the processor 1001.

Furthermore, the processor 1001 reads programs (program codes), a software module or data from the storage 1003 and/or the communication apparatus 1004 out to the memory 1002, and executes various types of processing according to these programs, software module or data. As the programs, programs that cause the computer to execute at least part of the operations described in the above embodiments are used. For example, the control section 401 of the user terminal 20 may be realized by a control program stored in the memory 1002 and operating on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to carry out the radio communication method according to the one embodiment of the present invention.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via a wired and/or radio network, and is also referred to as, for example, a network device, a network controller, a network card and a communication module. The communication apparatus 1004 may be configured to include a high frequency switch, a duplexer, a filter and a frequency synthesizer to realize, for example, Frequency Division Duplex (FDD) and/or Time Division Duplex (TDD). For example, the above transmission/reception antennas 101 (201), amplifying sections 102 (202), transmission/reception sections 103 (203) and channel interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using buses that are different between apparatuses.

Furthermore, the radio base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or all of each function block. For example, the processor 1001 may be implemented by using at least one of these types of hardware.

### (Modified Example)

In addition, each term that has been described in this description and/or each term that is necessary to understand this description may be replaced with terms having identical or similar meanings. For example, a channel and/or a symbol may be signals (signaling). Furthermore, a signal may be a message. A reference signal can be also abbreviated as an RS (Reference Signal), or may be also referred to as a pilot or a pilot signal depending on standards to be applied. Furthermore, a Component Carrier (CC) may be referred to as a cell, a frequency carrier and a carrier frequency.

Furthermore, a radio frame may include one or a plurality of durations (frames) in a time-domain. Each of one or a plurality of durations (frames) that composes a radio frame may be referred to as a subframe. Furthermore, the subframe may include one or a plurality of slots in the time-domain. The subframe may be a fixed time duration (e.g., 1 ms) that does not depend on the numerologies.

Furthermore, the slot may include one or a plurality of symbols (Orthogonal Frequency Division Multiplexing (OFDM) symbols or Single Carrier-Frequency Division Multiple Access (SC-FDMA) symbols) in the time-domain. Furthermore, the slot may be a time unit based on the numerologies. Furthermore, the slot may include a plurality of mini slots. Each mini slot may include one or a plurality of symbols in the time-domain. Furthermore, the mini slot may be referred to as a subslot.

The radio frame, the subframe, the slot, the mini slot and the symbol each indicate a time unit for conveying signals. The other corresponding names may be used for the radio frame, the subframe, the slot, the mini slot and the symbol. For example, 1 subframe may be referred to as a Transmission Time Interval (TTI), a plurality of contiguous subframes may be referred to as TTIs, or 1 slot or 1 mini slot may be referred to as a TTI. That is, the subframe and/or the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling for radio communication. For example, in the LTE system, the radio base station performs scheduling for allocating radio resources (a frequency bandwidth or transmission power that can be used by each user terminal) in TTI units to each user terminal. In this regard, a definition of the TTI is not limited to this.

The TTI may be a transmission time unit of a channel-coded data packet (transport block), code block and/or codeword, or may be a processing unit of scheduling or link adaptation. In addition, when the TTI is given, a time interval (e.g., the number of symbols) in which a transport block, a code block and/or a codeword are actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe or a long subframe. A TTI shorter than the general TTI may be referred to as a reduced TTI, a short TTI, a partial or fractional TTI, a reduced subframe, a short subframe, a mini slot or a subslot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

Resource Blocks (RBs) are resource allocation units of the time-domain and the frequency-domain, and may include one or a plurality of contiguous subcarriers in the frequency-domain. Furthermore, the RB may include one or a plurality of symbols in the time-domain or may have the length of 1 slot, 1 mini slot, 1 subframe or 1 TTI. 1 TTI or 1 subframe may each include one or a plurality of resource blocks. In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

In this regard, structures of the above radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and parameters described in this description may be expressed by using absolute values, may be expressed by using relative values with respect to given values or may be expressed by using other corresponding information. For example, a radio resource may be instructed by a given index.

Names used for parameters in this description are in no respect restrictive ones. For example, various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive names.

The information and the signals described in this description may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or optional combinations of these.

Furthermore, the information and the signals can be output from a higher layer to a lower layer and/or from the lower layer to the higher layer. The information and the signals may be input and output via a plurality of network nodes.

The input and output information and signals may be stored in a specific location (e.g., memory) or may be managed by using a management table. The information and signals to be input and output can be overwritten, updated or additionally written. The output information and signals may be deleted. The input information and signals may be transmitted to other apparatuses.

Notification of information is not limited to the aspect/embodiments described in this description and may be performed by using other methods. For example, the information may be notified by physical layer signaling (e.g., Downlink Control Information (DCI) and Uplink Control Information (UCI)), higher layer signaling (e.g., Radio Resource Control (RRC) signaling, broadcast information (Master Information Blocks (MIBs) and System Information Blocks (SIBs)), and Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") may be made not only by explicit notification but also implicit notification (by, for example, not notifying this given information or by notifying another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using wired techniques (e.g., coaxial cables, optical fiber cables, twisted pairs and Digital Subscriber Lines (DSL)) and/or radio techniques (e.g., infrared rays and microwaves), these wired techniques and/or radio techniques are included in a definition of the transmission media.

The terms "system" and "network" used in this description are compatibly used.

In this description, the terms "Base Station (BS)", "radio base station", "eNB", "gNB", "cell", "sector", "cell group", "carrier" and "component carrier" can be compatibly used. The base station is also referred to as a term such as a fixed station, a NodeB, an eNodeB (eNB), an access point, a transmission point, a reception point, a femtocell or a small cell in some cases.

The base station can accommodate one or a plurality of (e.g., three) cells (also referred to as sectors). When the base station accommodates a plurality of cells, an entire coverage area of the base station can be partitioned into a plurality of smaller areas. Each smaller area can provide communication service via a base station subsystem (e.g., indoor small base station (RRH: Remote Radio Head)). The term "cell" or "sector" indicates part or the entirety of the coverage area of the base station and/or the base station subsystem that provide communication service in this coverage.

In this description, the terms "Mobile Station (MS)", "user terminal", "User Equipment (UE)" and "terminal" can be compatibly used. The base station is also referred to as a term such as a fixed station, a NodeB, an eNodeB (eNB), an access point, a transmission point, a reception point, a femtocell or a small cell in some cases.

The mobile station is also referred to by a person skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

Furthermore, the radio base station in this description may be read as the user terminal. For example, each aspect/embodiment of the present invention may be applied to a configuration where communication between the radio base station and the user terminal is replaced with communication between a plurality of user terminals (D2D: Device-to-Device). In this case, the user terminal 20 may be configured to include the functions of the above radio base station 10. Furthermore, words such as "uplink" and "downlink" may be read as a "side". For example, the uplink channel may be read as a side channel.

Similarly, the user terminal in this description may be read as the radio base station. In this case, the radio base station 10 may be configured to include the functions of the above user terminal 20.

In this description, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MME) or Serving-Gateways (S-GW) yet are not limited to these) other than the base stations or a combination of these.

Each aspect/embodiment described in this description may be used alone, may be used in combination or may be switched and used when carried out. Furthermore, orders of the processing procedures, the sequences and the flowchart according to each aspect/embodiment described in this description may be rearranged unless contradictions arise. For example, the method described in this description presents various step elements in an exemplary order and is not limited to the presented specific order.

Each aspect/embodiment described in this description may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods and/or next-generation systems that are expanded based on these systems.

The phrase "based on" used in this description does not mean "based only on" unless specified otherwise. In other words, the phrase "based on" means both of "based only on" and "based at least on".

Every reference to elements that use names such as "first" and "second" used in this description does not generally limit the quantity or the order of these elements. These names can be used in this description as a convenient method for distinguishing between two or more elements. Hence, the reference to the first and second elements does not mean that only two elements can be employed or the first element should precede the second element in some way.

The term "deciding (determining)" used in this description includes diverse operations in some cases. For example, "deciding (determining)" may be regarded to "decide (determine)" calculating, computing, processing, deriving, investigating, looking up (e.g., looking up in a table, a database or another data structure) and ascertaining. Furthermore, "deciding (determining)" may be regarded to "decide (determine)" receiving (e.g., receiving information), transmitting (e.g., transmitting information), input, output and accessing (e.g., accessing data in a memory). Furthermore, "deciding (determining)" may be regarded to "decide (determine)" resolving, selecting, choosing, establishing and comparing. That is, "deciding (determining)" may be regarded to "decide (determine)" some operation.

The words "connected" and "coupled" used in this description or every modification of these words can mean every direct or indirect connection or coupling between two or more elements, and can include that one or more intermediate elements exist between the two elements "connected" or "coupled" with each other. The elements may be coupled or connected physically, logically or by way of a combination of the physical and logical connections. For example, "connection" may be read as "access".

It can be understood that, when connected in this description, the two elements are "connected" or "coupled" with each other by using one or more electric wires, cables and/or printed electrical connection, and by using electromagnetic energy having wavelengths in radio frequency-domains, microwave domains and/or (both of visible and invisible) light domains in some non-restrictive and non-comprehensive examples.

A sentence that "A and B are different" in this description may mean that "A and B are different from each other". Words such as "separate" and "coupled" may be also interpreted in a similar manner.

When the words "including" and "comprising" and modifications of these words are used in this description or the claims, these words intend to be comprehensive similar to the word "having". Furthermore, the word "or" used in this description or the claims intends not to be an exclusive OR.

The present invention has been described in detail above. However, it is obvious for a person skilled in the art that the present invention is not limited to the embodiments described in this description. The present invention can be carried out as modified and changed aspects without departing from the gist and the scope of the present invention defined based on the recitation of the claims. Accordingly, the disclosure of this description intends for exemplary explanation, and does not bring any restrictive meaning to the present invention.

## Claims

1. A user terminal comprising:
a reception section that receives a DL control channel; and
a control section that controls monitoring of a DL control channel candidate,
wherein the control section controls monitoring of a DL control channel candidate in a first control resource set configured by a network, and monitoring of a DL control channel candidate in a second control resource set configured by the network, and
at least one of an aggregation level, a payload length of DL control information, a CRC length and a time interval is different between the DL control channel in the first control resource set and the DL control channel in the second control resource set.

2. The user terminal according to claim 1, wherein a structure of a channel to be scheduled by the DL control channel is based on which one of the first control resource set and the second control resource set the DL control channel on which the channel is scheduled is mapped.

3. The user terminal according to claim 1 or 2, wherein the control section controls transmission or reception of information indicating whether or not to monitor a DL control channel candidate in a control resource set to be allocated on a time resource on which DL data is mapped.

4. The user terminal according to any one of claims 1 to 3, wherein, when a plurality of control resource sets are configured and each control resource set is the first control resource set or the second control resource set, a number of DL control channel candidates to be monitored in each control resource set is a constant.

5. The user terminal according to any one of claims 1 to 4, wherein the control section controls notifying the network of information indicating a maximum number of DL control channel candidates in a specific resource unit.

6. A radio communication method of a user terminal comprising:
receiving a DL control channel; and
controlling monitoring of a DL control channel candidate,
wherein the user terminal controls monitoring of a DL control channel candidate in a first control resource set configured by a network, and monitoring of a DL control channel candidate in a second control resource set configured by the network, and
at least one of an aggregation level, a payload length of DL control information, a CRC length and a time interval is different between the DL control channel in the first control resource set and the DL control channel in the second control resource set.
